# EUROPÄISCHE PATENTSCHRIFT

(11) **EP 2 228 160 B1**
(45) Veröffentlichungstag und Bekanntmachung des Hinweises auf die Patenterteilung: **12.03.2014**
(21) Anmeldenummer: 10001982.7
(22) Anmeldetag: 26.02.2010
(51) Int. Cl.: B23B 51/10

(54) **Druckmittelgesteuertes Senkwerkzeug**
Pression means powered counterboring tool
Outil pour lamer piloté par un moyen de pression

(30) Priorität: 13.03.2009 DE 102009012996
(43) Veröffentlichungstag der Anmeldung: 15.09.2010
(73) Patentinhaber: Heule, Ulf, 9436 Balgach (CH)
(72) Erfinder: Studer, Harry, 9436 Balgach (CH); Heule, Heinrich, 9434 Au SG (CH)
(74) Vertreter: Riebling, Peter

(56) Entgegenhaltungen:
- EP-A1- 0 787 050
- DE-A1- 10 215 004
- US-A- 5 927 911
- US-A1- 2005 166 727

## Beschreibung

Gegenstand der Erfindung ist ein Druckmittel- insbesondere Kühlmittelgesteuertes Senkwerkzeug nach dem Oberbegriff des Patentanspruches 1.

Mit Entwicklungen der schwedischen Firma Grandlund sind kühlmittelgesteuerte Senkwerkzeuge bekannt geworden, bei der Verschwenkbewegung des Senkwerkzeuges jedoch nicht unmittelbar über ein aus dem Kühlmittelkanal entströmendes Kühlmedium betätigt wird, sondern über eine Kolben-Zylinder-Anordnung.

Unter dem Begriff "Senkwerkzeuge" werden hierbei sämtliche spanabhebenden Werkzeuge verstanden, die zum Plansenken und zum Formsenken geeignet sind. Es handelt sich demzufolge auch um Vorwärts-Senkwerkzeuge als auch um Rückwärts-Senkwerkzeuge. Unter dem Begriff "Vorwärts-Senkwerkzeug" wird ein Senkwerkzeug verstanden, welches die Vorderseite einer Bohrung ansenkt oder entgratet, ohne durch die Bohrung hindurch zu fahren.

Unter dem Begriff des "Rückwärts-Senkwerkzeuges" wird ein Senk- oder Entgratwerkzeug verstanden, welches durch die Bohrung hindurch fährt auf der Rückseite der Bohrung herausfährt und in einem Rückwärtshub den rückwärtigen Bohrungsrand ansenkt oder entgratet.

Bei der Anwendung der vorher genannten Senkwerkzeuge besteht das Bedürfnis, das Kühlmittel möglichst effizient zuzuführen und hierbei nicht nur das Kühlmittel von außen an die Bearbeitungsstelle zuzuführen, sondern von der Innenseite des Werkzeuges aus, um die spanberührten Flächen im Werkzeug auch spülen und kühlen zu können.

Bei derartigen Senkwerkzeugen besteht das Problem, dass insbesondere die Messerkammer und das Messerfenster mit Spänen gefüllt sind, und diese Späne müssen auf möglichst ökonomische Art entfernt werden.

Mit der EP 0 787 050 A1 wird ein Druckmittel gesteuertes Senkwerkzeug mit einem oder mehreren spanabhebenden Messern gezeigt, wobei für die Schwenkbewegung des Messers dieses unmittelbar von einem Druckmittel/Steuermedium angeströmt wird. Bei dieser Ausführungsform wird ein Ausschwenken des Messers mit Hilfe eines Druckmittels bzw. Steuermediums und ein Einschwenken hingegen durch Federkraft erreicht. Nachteilig ist, dass das Ausschwenken des Messers gegen eine Federkraft erfolgt, wofür ein sehr hoher Druckmitteldruck erforderlich ist. Der hohe Druckmitteldruck kann wiederum nur durch einen entsprechenden höheren Maschinenaufwand erreicht werden. Ein weiterer Nachteil ist, dass eine genaue Positionierung des Messers im Werkstück in Bezug auf das Kräftespiel zwischen dem Druckmitteldruck und der Federkraft schwer zu erreichen ist. Ebenso stellt der Einsatz einer Feder zum Einklappen des Messers einen Nachteil dar, da bei diesem Vorgang sich Eisenspäne aufgrund des fehlenden Druckmittels zwischen dem Gehäuse und dem Messer verklemmend können.

Bei derartigen Senkwerkzeugen ist es bekannt, die auswärts geschwenkte Arbeitsstellung des Schneidmessers im Senkwerkzeug dadurch zu erreichen, das aufgrund der Fliehkraft, die bei der Drehung des Werkzeuges entsteht, das Messer fliehkraftbedingt aus dem Messerfenster herausschwenkt und in eine Arbeitsstellung gelangt.

Solche Fliehkräfte entstehen insbesondere bei Antriebsdrehzahlen von z. B. im Bereich 200 bis 1000 Umdrehungen pro Minute, wobei diese Angabe nur als Maßstab sein soll, mit welchen Drehzahlen ein solches fliehkraftgesteuertes Werkzeug betrieben wird. Diese Angabe ist nicht schutzrechtsbeschränkend zu verstehen.

Bei derartigen fliehkraftgesteuerten Senkwerkzeugen besteht jedoch das Problem, dass man es aufgrund der Fliehkraft in eine günstige Arbeitsstellung sicher bringen kann, dass jedoch die Zurückschwenkung des Messers in eine passive Stellung nicht ohne Weiteres möglich ist. Hierzu bedarf es größerer mechanischer Antriebsmittel, um das aufgrund von Fliehkraft ausgeschwenkte Messer wieder in eine zurück geschwenkte passive Ruhelage im Messerfenster zu bringen.

Der Erfindung liegt deshalb die Aufgabe zugrunde, die Schwenkbewegung mindestens eines Schneidmessers in einem Senkwerkzeug möglichst einfach auszuführen.

Zur Lösung der gestellten Aufgabe ist die Erfindung durch die technische Lehre des Anspruches 1 gekennzeichnet.

Wesentliches Merkmal der Erfindung ist, dass die Schwenkbewegung mindestens eines Schneidmessers in einem Senkwerkzeug durch direkte Anströmung mit einem Druckmittel erfolgt.

Mit der gegebenen technischen Lehre ergibt sich der wesentliche Vorteil, dass es nun erstmals möglich ist, mit einem Druckmittel die Schwenkbewegung des Schneidmessers in dem Senkwerkzeug direkt zu steuern. Unter dem Begriff "direktes Anströmen" wird verstanden, dass das Druckmedium ohne Zwischenschaltung einer Kolben-Zylinder-Anordnung oder eines anderen Aktors unmittelbar auf eine Anströmfläche des zu betätigenden Schneidmessers einwirkt.

Der einfacheren Beschreibung wegen wird in der folgenden Beschreibung davon ausgegangen, dass das Senkwerkzeug ein einziges Kippmesser aufweist, welches exzentrisch auf einem Lagerbolzen in einem Messerfenster an der Vorderseite eines Messergehäuses ausschwenkbar gelagert ist. Hierauf ist die Erfindung jedoch nicht beschränkt. Die Erfindung kann auch mehrere Messer betreffen, die nebeneinander oder übereinander angeordnet sind und die jeweils ausschwenkbar und einschwenkbar über eine zugeordnete Druckmittelsteuerung angetrieben sind.

Vorteilhaft besteht die Druckmittelsteuerung aus einem Steuerkanal, welche Ausströmöffnung des Steuerkanals unmittelbar und direkt auf eine Druckfläche des Messers wirkt.

Damit wird ein besonders einfacher Messerantrieb in Form eines Schwenkantriebes durch das Druckmittel beschrieben, weil es damit erstmals möglich ist, ohne Zwischenschaltung einer Kolben-Zylinder-Anordnung die Schwenkbewegung des Messers unmittelbar selbst anzutreiben.

Unter dem Begriff eines Steuerkanals und eines darin strömenden Druckmediums werden hierbei unterschiedliche Medien verstanden.

Vorteilhaft ist es vorgesehen, dass das Steuermedium das Kühlschmiermittel ist, welches als flüssiges Kühlschmiermittel die Schwenkbewegung des Messers steuert und gleichzeitig auch für eine Spülung und Kühlung des Messers und des Messerfensters und der Messerkammer sorgt.

Damit werden besondere Vorteile erreicht, denn dieses Kühlschmiermittel wird einem doppelten Zweck zugeführt, nämlich einmal der Kühlung des Messers und der Arbeitsregion, dort wo die hohen Temperaturen während der spanabhebenden Bearbeitung entstehen und zum Anderen zu einer ausgezeichneten Spülung der Umgebung des Messers, sodass damit immer die Messerkammer und das Messerfenster von Spänen freigehalten werden. Dies bedeutet eine wesentliche Verbesserung der Prozesssicherheit beim Einsatz eines solchen Senkwerkzeuges, denn es kann nicht mehr zu Blockierungen des Messers in dem Messerfenster kommen.

Gleichzeitig wird das Kühlmittel von innen her zugeführt, was dazu führt, dass das gesamte Senkwerkzeug von innen her gekühlt wird und insbesondere das Kühlmittel direkt auf die Bearbeitungsfläche zugeführt wird. Es bedarf dann nicht mehr einer Heranführung des Kühlmittels über externe Kühlmittelzuführdüsen.

Durch den direkten Schwenkantrieb des Messers im Senkwerkzeug durch das Druckmittel wird eine besondere Vereinfachung der Konstruktion erreicht, denn es bedarf keinerlei weiterer Teile, um diese Schwenkbewegung zu bewirken.

Es handelt sich demzufolge nur um ein bewegliches Teil, nämlich das Messer selbst, welches einseitig schwenkbar gelagert auf einem zugeordneten Lagerbolzen im Messergehäuse gelagert ist.

Unter dem Begriff des Steuermediums wird jedoch auch ein Luftmedium oder überhaupt ein Steuermedium als Fluid verstanden, welches durch die Steuerbohrung im Messergehäuse zugeführt wird und die Schwenkbewegung des Messers antreibt. In diesem Fall - wenn das Kühlmittel nicht gleichzeitig auch das Steuermedium ist - muss das Kühlmedium von außen über externe Kühlkanäle zugeführt werden.

Vorstehend wurde ausgeführt, dass das Senkwerkzeug fliehkraftgesteuert ist, was bedeutet, dass durch den Drehantrieb des Werkzeuges das Messer aus dem Messergehäuse herausschwenkt und in eine aktive Arbeitsstellung gelangt.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Im Folgenden wird die Erfindung anhand von mehrere Ausführungswege darstellenden Zeichnungen näher erläutert.

Es zeigen:
- Figur 1:: Schnitt durch eine erste Variante eines Senkwerkzeuges
- Figur 2:: Draufsicht auf die Stirnseite in Pfeilrichtung II in Figur 1
- Figur 3:: perspektivische Darstellung des Messers
- Figur 4:: das Senkwerkzeug nach Figur 1 mit einem eingefahrenen Messer
- Figur 5:: die gleiche Darstellung gemäß Figur 4 mit dem ausgefahrenen Messer
- Figur 6:: die Gegenüberstellung einer Kühlmittelzuführung in Verbindung mit der Schwenkbewegung im Verlaufe eines Verfahrensablaufes
- Figur 7:: ein Schnitt durch eine zweite Variante eines Senkwerkzeuges
- Figur 8:: die zweite Funktionsstellung der Variante des Senkwerkzeuges nach Figur 7
- Figur 9:: die ausgefahrene Stellung des Messers gemäß Figur 7
- Figur 10:: die eingefahrene Stellung des Messers nach Figur 8

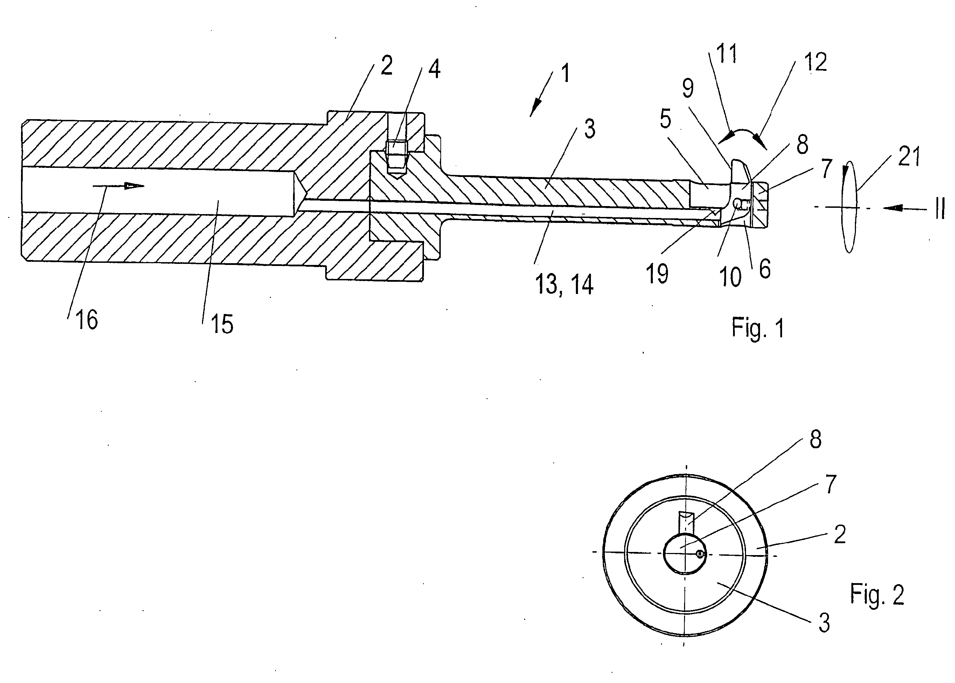

In Figur 1 ist eine einfache Form eines Senkwerkzeuges 1 dargestellt, welches im Wesentlichen aus einem zylindrischen Grundkörper 2 besteht, der in Richtung seiner Längsmittenachse drehend angetrieben ist, und zwar im gezeigten Ausführungsbeispiel, beispielsweise in Pfeilrichtung 21.

Im Innenraum des Grundkörpers 2 ist hierbei eine Zuführbohrung 15 für ein Druckmittel angeordnet.

Der Einfachheit halber wird in der folgenden Beschreibung davon ausgegangen, dass dieses Druckmittel/Steuermedium ein Kühlmedium ist, welches sowohl zur Druckmittelsteuerung des Messers 8 dient als auch gleichzeitig zur Kühlung und Spülung der Messerkammer 5 und des Messerfensters 6.

Mit Hilfe einer Befestigungsschraube 4 ist an der Vorderseite des Grundkörpers ein etwa auch zylindrisches Messergehäuse 3 angeordnet, in dessen Innenraum eine Längsbohrung in Form eines Steuerkanals 13 geführt ist. In diesem Steuerkanal 13 ist das Druckmittel/Steuermedium 14 in Pfeilrichtung 16 strömend eingezeichnet.

Bei der Vorderseite des Messergehäuses 3 ist eine Messerkammer 5 angeordnet, in deren oberen Bereich ein Lagerbolzen 10 angeordnet ist, auf dem einseitig schwenkbar das Messer 8 angeordnet ist. Die Messerkammer ist nach hinten durch ein Messerfenster 6 verlängert und die obere Begrenzung der Messerkammer 5 ist durch die Stirnseite 7 des Messergehäuses 3 gebildet.

Das Messer 8 nach Figur 1 befindet sich in seiner ausgefahrenen Arbeitsstellung in einem Rückwärts-Senkvorgang, sodass die untere Schneidkante 9 sich schneidend und spanabhebend an einen nicht näher dargestellten Bohrungsrand anlegt.

Das Messer ist gemäß Figur 1 in Pfeilrichtung 12 somit in seiner Arbeitsstellung geschwenkt, während es in Pfeilrichtung 11 in seine Ruhestellung verschwenkt ist, so dass mindestens die Schneidkante 9 in der Messerkammer 5 eingeschwenkt wird und das Messer damit in eine passive, nicht schneidende Stellung gelangt.

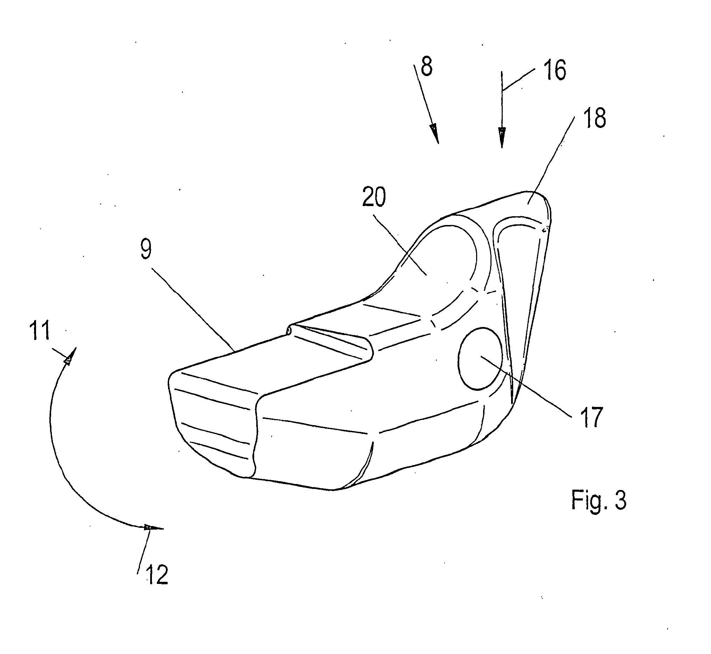

In der gezeigten Stellung nach Figur 1 - bei der sich das Messer 8 in der Arbeitsstellung befindet und im zerspanenden Eingriff mit einem nicht näher dargestellten Bohrungsrand wird die ausgeschwenkte Stellung in Pfeilrichtung 12 durch den Bearbeitungsvorgang selbst beibehalten, sodass nun auch in dieser Stellung über den Steuerkanal 13 das Steuermedium 14 in Pfeilrichtung 16 in die Messerkammer 5 strömt, wobei ein zweifacher Strömungsweg vorgesehen ist. Einerseits strömt dieser Medienstrom auf die Druckfläche 18 (siehe Figur 3) des Messers 8 und versucht dieses wieder in seine passive Stellung in Pfeilrichtung 11 zurückzuschwenken, was jedoch nicht gelingt, weil das Messer sich noch im schneidenden Eingriff mit dem Bohrungsrand befindet. Andererseits tritt ein Teil des Druckmittelstroms über eine Bypassbohrung 19 direkt in die Messerkammer 5 ein und spült die Messerkammer 5 und kühlt gleichzeitig die Bearbeitungsfläche der Schneidkante 9 an dem zugeordneten Bohrungsrand. Damit wird demzufolge auch während des Zerspanungsvorganges die Messerkammer 5 und das Messerfenster 6 mit dem Kühlmedium gespült.

Die Figur 2 zeigt die Stirnansicht der gesamten Anordnung, aus der erkennbar ist, dass das Messer 8 in seiner Arbeitsstellung aus der Messerkammer 5 ausgeschwenkt ist.

In Figur 3 ist eine perspektivische Darstellung des Messers 8 gezeigt, aus der erkennbar ist, dass die Schneidkante 9 im Bereich einer Schneidfläche angeordnet ist und dass es insgesamt zwei von dem Steuermedium berührte Druckflächen 18, 20 gibt.

In der in Figur 1 dargestellten Lage strömt der Druckmittelstrom in Pfeilrichtung 16 auf die obere Druckfläche 18 und versucht das Messer in seine eingeschwenkte Stellung in Pfeilrichtung 11 zu bringen.

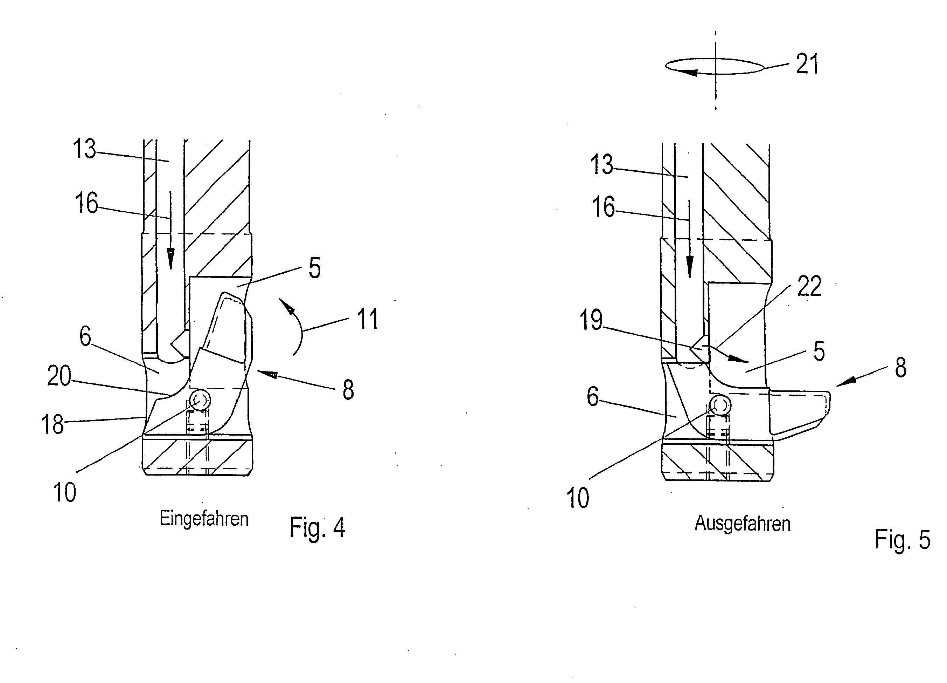

Die zweite Druckfläche 20 kommt in der Darstellung nach Figur 4 zur Anwendung.

In Figur 4 ist gezeigt, dass der Drehantrieb für das Senkwerkzeug 1 entfällt und dass nun der Druckmittelantrieb in Pfeilrichtung 16 unmittelbar auf die Druckfläche 18 wirkt. Damit wird das Messer in Pfeilrichtung 11 in seine eingefahrene Lage verschwenkt, und in dieser eingefahrenen Lage wird der Druckmittelstrom in Pfeilrichtung 16 weiter auf die Druckfläche 20 des Messers 8 wirken, um dieses in der eingefahrenen Lage zu arretieren.

Soll hingegen das Messer ausgefahren werden, so wie dies in Figur 1 und Figur 5 dargestellt ist, muss das Druckmittel/Steuermedium 14 vorübergehend aus dem Steuerkanal 13 entfernt werden, d. h., es ist kein Druck im Steuerkanal vorhanden. Es wird dann der Drehantrieb in Pfeilrichtung 21 eingeschaltet, sodass das Messer in Pfeilrichtung 12 ausschwenkt und in die in Figur 5 ausgeschwenkte Lage kommt.

In dieser Stellung kann dann das Druckmittel/Steuermedium 14 auf den Steuerkanal 13 gegeben werden, welches dann bevorzugt über die Bypassbohrung 19 in Pfeilrichtung 22 in die Messerkammer 5 strömt und gleichzeitig auch das Messerfenster 6 spült.

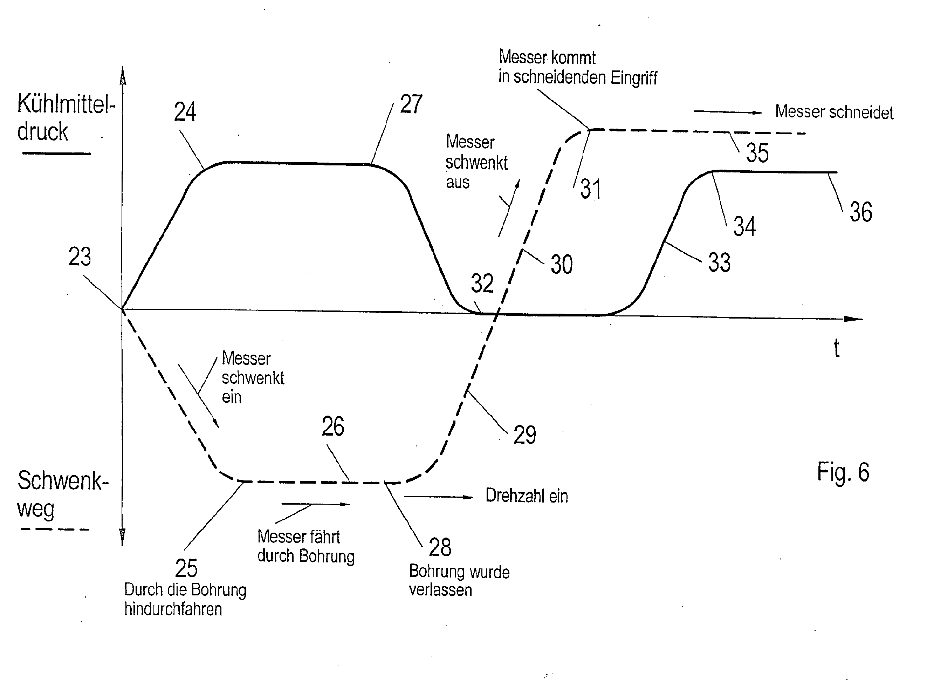

Dies gilt erst, wenn das Senkwerkzeug in Bearbeitungseingriff mit einer Bohrung ist, wie dies anhand des Ablaufdiagramms in Figur 6 näher dargestellt wird.

Auf der Ordinate ist nach oben gerichtet der Kühlmitteldruck aufgezeichnet, während auf der Ordinate nach unten gehend der Schwenkweg des Messers eingezeichnet ist.

Der nach unten gerichtete Schwenkweg in Figur 6 bedeutet die eingefahrene Stellung des Messers, während der nach oben gerichtete Schwenkweg (positive Werte des Schwenkweges) die ausgefahrene Stellung des Messers bedeutet.

Ausgehend von der Position 23 wird zunächst angenommen, dass sowohl kein Kühlmitteldruck vorhanden ist und sich das Messer in einer undefinierten Zwischenstellung befindet.

Im Kurvenast zwischen Position 23 und 24 wird das Druckmittel/Steuermedium 14 eingeschaltet und das Druckmittel/Steuermedium 14 wirkt nun in Pfeilrichtung 16 auf die Druckfläche 18, so dass das Messer im Kurvenastbereich zwischen 23 und 25 eingefahren wird und in Position 25 seine vollkommene eingefahrene Stellung erreicht hat.

Im Übergang zwischen der Position 25 und der Position 26 fährt das Messer dann durch die Bohrung hindurch, wobei der Kühlmitteldruck zwischen den Positionen 24 und 27 aufrecht erhalten bleibt.

Ab der Position 28 fährt das Messer in eingefahrener Stellung aus der Bohrung heraus und gelangt an den rückwärtigen Bohrungsrand.

Deshalb wird bei Position 27 das Kühlmittel abgestellt und verliert bis zur Position 32 seinen vollkommenen Druck.

Weil nun kein Kühlmitteldruck mehr auf dem Messer 8 lastet, wird das Messer in der Position 29 durch Starten des Drehantriebes des Senkwerkzeuges fliehkraftbedingt nach außen verschwenkt und fährt fliehkraftbedingt aus der Messerkammer 5 heraus, sodass es mit positiven Werten bei Position 32 im Kurvenast 30 nun seinen Ausschwenkweg beginnt.

Das Ausschwenken erfolgt bis zur Position 31, wobei wesentlich ist, dass in dieser Position noch der Kühlmitteldruck weggenommen ist, um ein vollständiges Ausschwenken zu erreichen.

Bei Position 31 kommt das Messer 8 in einen zerspanenden Eingriff mit einem nicht näher dargestellten Werkstück und gleichzeitig wird über den Kurvenast 33 das Kühlmittel auf einen maximalen Druck bis auf Position 34 erhöht, so dass ab dem spanenden Eingriff ein vollkommener Kühlmittelzufluss vorhanden ist.

In der Position zwischen 34, 35 und 36 erfolgt nun die eigentliche Arbeitsstellung des Messers, welches sich im spanenden Eingriff mit dem nicht näher dargestellten Werkstück befindet.

In analoger Weise erfolgt das Zurückschwenken des Messers 8 in die Messerkammer 5 nach Beendigung der spanabhebenden Bearbeitung.

Bei Position 31 sollte also der Kühlmitteldruck möglichst niedrig sein, um das Messer in eine stabile ausgeschwenkte Lage zu bringen.

Nach Beendigung des spanabhebenden Vorganges erfolgt der gesamte Vorgang in analoger Weise rückwärts, d. h., es wird dann zunächst das Kühlmittel weggenommen, dann wird das Messer aus dem zerspanenden Eingriff mit dem Werkstück gebracht, dann wird der Drehantrieb des Senkwerkzeuges gestoppt, danach wird das Kühlmittel eingeschaltet und das Messer klappt in das Messerfenster 6 hinein und danach wird das Senkwerkzeug mit dem im Messergehäuse 3 eingeschwenkten Messer 8 durch die Durchgangsbohrung wieder zurückgefahren.

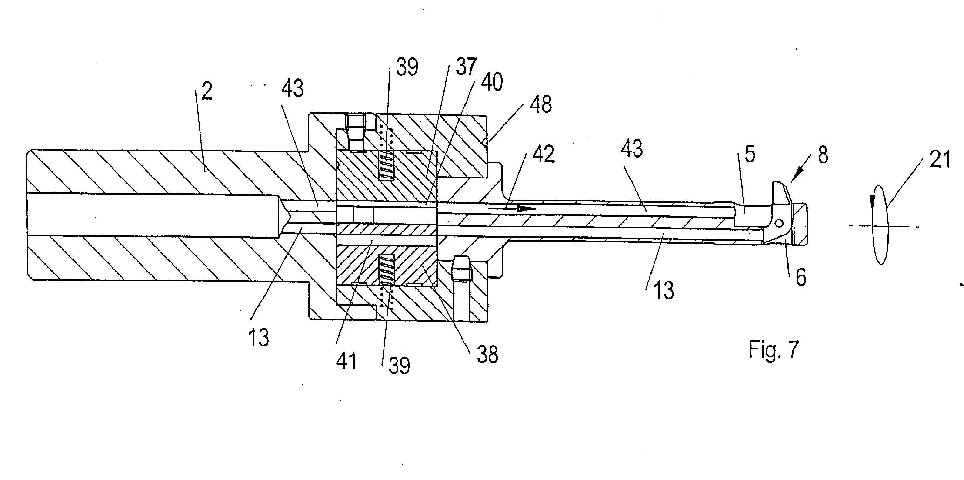

Die Figuren 7 bis 10 zeigen Varianten der erst genannten Ausführung, wobei darauf hingewiesen ist, dass für die gleichen Teile die gleichen Bezugszeichen gelten. Ebenso gelten die gleichen Funktionsabläufe, sodass nur noch auf die wesentlichen Unterschiede zu der Ausführung nach den Figuren 1 bis 6 Bezug genommen wird.

In Figur 7 ist ein über zwei Steuerkanäle 13, 43 gesteuertes Messer 8 dargestellt.

Mit einem fliehkraftgesteuerten Umschaltventil wird das Druckmittel/Steuermedium 14 zwischen dem Steuerkanal 13 und dem Steuerkanal 43 hin und her geschaltet.

In der in Figur 7 dargestellten Lage ist das Senkwerkzeug 1 in seiner Arbeitsstellung dargestellt, d. h. es ist in Pfeilrichtung 21 angetrieben, und dass Messer 8 ist fliehkraftbedingt aus der Messerkammer 5 herausgeschwenkt. In dieser Stellung sind die beiden Fliehkraftkörper 37, 38, die jeweils durch eine Druckfeder 39 von der Gehäusewandung eines Steuergehäuses 48 abgedrückt sind, an ihre Wandung im Innenraum des Steuergehäuses 48 entgegen der Kraft der Druckfeder 39 angepresst.

Damit wird der eine Steuerkanal 43 auf Durchgang geschaltet, während der andere Steuerkanal 13 abgeschaltet ist.

Das Steuermedium strömt somit in Pfeilrichtung 42 von dem hinteren Steuerkanal 43 durch den Verbindungskanal 40 im Steuergehäuse 48 in den Steuerkanal 43 in Pfeilrichtung 42 und fährt das Messer aus, hält es in seiner ausgeschwenkten Stellung und kühlt dieses Messer gleichzeitig.

Die Figur 7 zeigt noch die Kombination beider Arten, wobei die Fliehkraft den Druck des Steuermediums aus dem Steuerkanal 43 unterstützt und beide Kräfte das Messer 8 in der ausgeschwenkten Stellung halten.

Zum Erreichen der eingeschwenkten Stellung wird der Fliehkraftantrieb entfernt, so dass die beiden Fliehkraftkörper 37, 38 unter der Kraft der jeweiligen Druckfeder 39 in die radial einwärts verschobene Position im Steuergehäuse 48 kommen, und damit wird der Verbindungskanal 40 geschlossen und gleichzeitig ein Verbindungskanal 41 eröffnet, welcher die Verbindung zwischen dem Kanal 13 aus dem Grundkörper 2 zu dem Kanal 13 im Messergehäuse 3 herstellt.

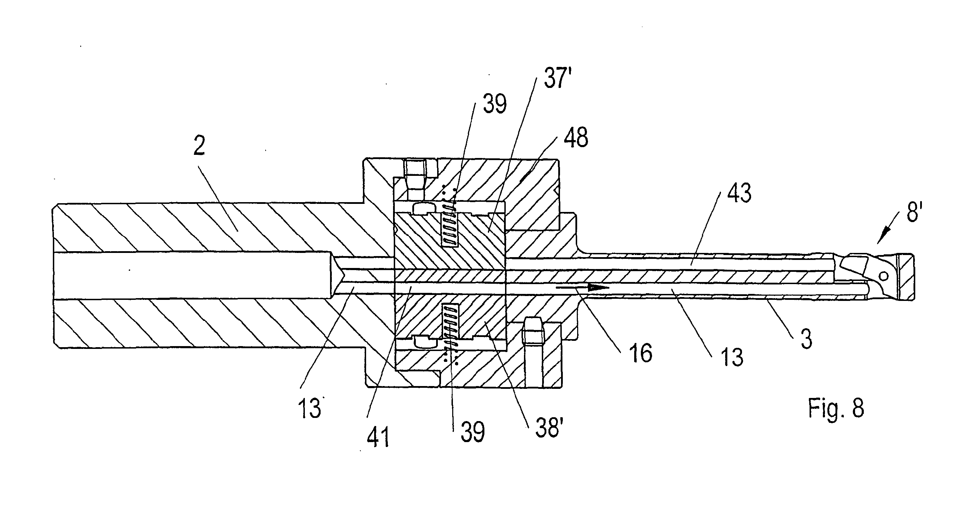

Es strömt somit das Druckmittel/Steuermedium 14 in Pfeilrichtung 16 durch den Steuerkanal 13 im Messergehäuse 3 und schwenkt das Messer 8 in seine eingefahrene Stellung 8', wie es in Figur 8 dargestellt ist.

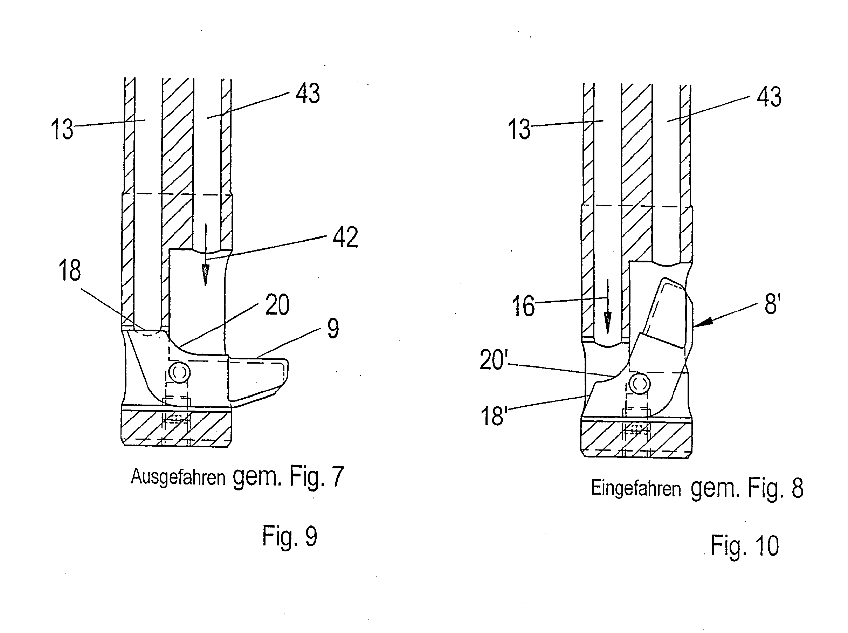

Die Figuren 9 und 10 zeigen die beiden Schwenkstellungen des Messers 8 nochmals in vergrößerter Darstellung im Vergleich zu den Figuren 7 und 8. Es ist erkennbar, dass diese beiden Steuerbohrungen auf getrennte Druckflächen 18, 20 wirken, um so den Messerantrieb zu bewerkstelligen.

In der Figur 9 wirkt somit der Medienstrom aus dem Steuerkanal 43 in Pfeilrichtung 42 auf die Druckflächen 18, 20 in Verbindung mit der Freifläche, in der die Schneidkante 9 angeordnet ist.

In der eingefahrenen Stellung nach Figur 10 wirkt der Medienstrom in Pfeilrichtung 16 aus dem Steuerkanal 13 zunächst auf die Druckfläche 18 und dann mit dem weiteren Einschwenken des Messers auf die Druckfläche 20.

**Zeichnungslegende**

| | | | |
|---|---|---|---|
| 1 | Senkwerkzeug | 22 | Pfeilrichtung |
| 2 | Grundkörper | 23 | Position |
| 3 | Messergehäuse | 24 | Position |
| 4 | Befestigungsschraube | 25 | Position |
| 5 | Messerkammer | 26 | Position |
| 6 | Messerfenster | 27 | Position |
| 7 | Stirnseite | 28 | Position |
| 8 | Messer | 29 | Position |
| 9 | Schneidkante | 30 | Kurvenast |
| 10 | Lagerbolzen | 31 | Position |
| 11 | Pfeilrichtung | 32 | Position |
| 12 | Pfeilrichtung | 33 | Kurvenast |
| 13 | Steuerkanal | 34 | Position |
| 14 | Druckmittel/Steuermedium | 35 | Kurvenast |
| 15 | Zuführbohrung | 36 | Kurvenast |
| 16 | Pfeilrichtung | 37 | Fliehkraftkörper |
| 17 | Bohrung | 38 | Fliehkraftkörper |
| 18 | Druckfläche | 39 | Druckfeder |
| 19 | Bypassbohrung | 40 | Verbindungskanal |
| 20 | Druckfläche | 41 | Verbindungskanal |
| 21 | Drehrichtung | 42 | Pfeilrichtung |
| 43 | Steuerkanal | 46 | Schaufelfläche |
| 44 | Umlenkkanal | 47 | Schaufelfläche |
| 45 | Pfeilrichtung | 48 | Steuergehäuse |

## Patentansprüche

1. Druckmittel gesteuertes Senkwerkzeug (1) mit einem oder mehreren spanabhebenden Messern (8), wobei für die Schwenkbewegung (11, 12) mindestens eines Messers (8) dieses unmittelbar von einem Druckmittel/Steuermedium (14) angeströmt ist, **dadurch gekennzeichnet, dass** das Ausschwenken (12) des Messers (8) mit Fliehkraft und das Einschwenken (11) des Messers (8) mit einem Druckmittel/Steuermedium (14) erfolgt.

2. Senkwerkzeug (1) nach Anspruch 1, **dadurch gekennzeichnet, dass** das Druckmittel/Steuermedium (14) die Schwenkbewegung (11, 12) des Messers (8) steuert und für eine Spülung und Kühlung des Messers (8) sorgt.

3. Senkwerkzeug (1) nach Anspruch 1 oder 2, **dadurch gekennzeichnet, dass** das Senkwerkzeug (1) ein einziges Kippmesser aufweist welches exzentrisch auf einem Lagerbolzen (10) in einem Messerfenster (6) an der Vorderseite eines Messergehäuses ausschwenkbar gelagert ist.

4. Senkwerkzeug (1) nach einem der Ansprüche 1 bis 3, **dadurch gekennzeichnet, dass** das Senkwerkzeug (1) mehrere Messer aufweist, die nebeneinander oder übereinander angeordnet sind und die jeweils ausschwenkbar (12) und einschwenkbar (11) über eine zugeordnete Druckmittelsteuerung angetrieben sind.

5. Senkwerkzeug nach einem der Ansprüche 1 bis 4, **dadurch gekennzeichnet, dass** die Druckmittelsteuerung aus einem Steuerkanal (13) erfolgt, dessen Ausströmöffnung des Steuerkanals unmittelbar und direkt auf eine Druckfläche (18, 20) des Messers (8) wirkt.

6. Senkwerkzeug nach einem der Ansprüche 1 bis 5, **dadurch gekennzeichnet, dass** das Messer (8) federbelastet in seiner eingefahrenen Ruhestellung und/oder in seiner ausgefahrenen Arbeitsststellung gehalten ist.

7. Senkwerkzeug nach einem der Ansprüche 1 bis 6, **dadurch gekennzeichnet, dass** das Ausschwenken (12) des Messers (8) mit Fliehkraft und Federkraft und das Einschwenken (11) des Messers (8) mit Druckmittel/steuermedium (14) erfolgt.

8. Senkwerkzeug nach einem der Ansprüche 1 bis 6, **dadurch gekennzeichnet, dass** das Ausschwenken (12) des Messers (8) mit Fliehkraft und Kühlmittel und Federkraft und das Einschwenken (11) des Messers (8) mit Druckmittel/Steuermedium (14) erfolgt.

9. Senkwerkzeug nach einem der Ansprüche 1 bis 6, **dadurch gekennzeichnet, dass** das Ausschwenken (12) des Messers (8) mit Fliehkraft und Druckmittel/Steuermedium (14) und das Einschwenken (11) des Messers (8) mit Federkraft und Druckmittel/Steuermedium (14) erfolgt.

10. Senkwerkzeug nach einem der Ansprüche 1 bis 9, **dadurch gekennzeichnet, dass** bei sich im Eingriff befindenden Messer (8) das Druckmittel/Steuermedium (14) über eine Bypassbohrung (19) in die Messerkammer (5) strömt und gleichzeitig auch das Messerfenster (6) spült.

11. Senkwerkzeug nach einem der Ansprüche 1 bis 10, **dadurch gekennzeichnet, dass** mit einem fliehkraftgesteuerten Umschaltventil das Druckmittel/Steuermedium (14) zwischen einem Steuerkanal (13) und einem Steuerkanal (43) hin und her schaltbar ist, um das Messer einzufahren (11) oder auszufahren (12).

## Claims

1. Pressure medium-controlled countersinking tool (1) with one or more chip-removing blades (8), wherein for the pivoting movement (11, 12) of at least one blade (8), a pressure medium/control medium (14) flows directly thereon, **characterised in that** the outward pivoting (12) of the blade (8) takes place using centrifugal force and the inward pivoting (11) of the blade (8) takes place using a pressure medium/control medium (14).

2. Countersinking tool (1) according to claim 1, **characterised in that** the pressure medium/control medium (14) controls the pivoting movement (11, 12) of the blade (8) and ensures a rinsing and cooling of the blade (8).

3. Countersinking tool (1) according to claim 1 or 2, **characterised in that** the countersinking tool (1) has a single tilting blade, which is eccentrically mounted on a bearing bolt (10) in a blade window (6) on the front side of a blade housing so that it can be pivoted out.

4. Countersinking tool (1) according to any one of claims 1 to 3, **characterised in that** the countersinking tool (1) has a plurality of blades, which are arranged next to one another or one above the other and which are driven by means of an associated pressure medium control so as to be pivotable out (12) and pivotable in (11), in each case.

5. Countersinking tool according to any one of claims 1 to 4, **characterised in that** the pressure medium control takes place from a control channel (13), of which the outflow opening of the control channel acts directly and immediately on a pressure face (18, 20) of the blade (8).

6. Countersinking tool according to any one of claims 1 to 5, **characterised in that** the blade (8) is held in a spring-loaded manner in a retracted rest position and/or in an extended work position.

7. Countersinking tool according to any one of claims 1 to 6, **characterised in that** the outward pivoting (12) of the blade (8) takes place using centrifugal force and spring force and the inward pivoting (11) of the blade (8) takes place using pressure medium/control medium (14).

8. Countersinking tool according to any one of claims 1 to 6, **characterised in that** the outward pivoting (12) of the blade (8) takes place using centrifugal force and coolant and spring force and the inward pivoting (11) of the blade (8) takes place using pressure medium/control medium (14).

9. Countersinking tool according to any one of claims 1 to 6, **characterised in that** the outward pivoting (12) of the blade (8) takes place using centrifugal force and pressure medium/control medium (14) and the inward pivoting (11) of the blade (8) takes place using spring force and pressure medium/control medium (14).

10. Countersinking tool according to any one of claims 1 to 9, **characterised in that** when the blade (8) is engaged, the pressure medium/control medium (14) flows via a bypass bore (19) into the blade chamber (5) and simultaneously also rinses the blade window (6).

11. Countersinking tool according to any one of claims 1 to 10, **characterised in that** the pressure medium/control medium (14) can be switched back and forth between a control channel (13) and a control channel (43) with a centrifugal force-controlled switching valve in order to retract (11) or extend (12) the blade.

## Revendications

1. Outil de lamage (1) commandé par pression, avec une ou plusieurs lames d'enlèvement de copeaux (8), étant précisé que pour le mouvement pivotant (11, 12) d'au moins une lame (8), un agent de pression/commande (14) passe immédiatement sur ladite lame (8), **caractérisé en ce que** le déploiement (12) de la lame (8) se fait avec la force centrifuge et la rétraction (11) de la lame (8) se fait avec un agent de pression/commande (14).

2. Outil de lamage (1) selon la revendication 1, **caractérisé en ce que** l'agent de pression/commande (14) commande le mouvement pivotant (11, 12) de la lame (8) et assure un rinçage et un refroidissement de la lame (8).

3. Outil de lamage (1) selon la revendication 1 ou 2, **caractérisé en ce que** l'outil de lamage (1) présente une seule lame basculante, qui est montée de manière excentrique sur un tourillon (10) dans une fenêtre de lame (6) sur le côté avant d'un boîtier de lame pour pouvoir être déployée.

4. Outil de lamage (1) selon l'une des revendications 1 à 3, **caractérisé en ce que** l'outil de lamage (1) présente plusieurs lames qui sont juxtaposées ou superposées et qui sont entraînées chacune par une commande à pression associée, pour pouvoir être déployées (12) et rétractées (11).

5. Outil de lamage selon l'une des revendications 1 à 4, **caractérisé en ce que** la commande à pression se fait à partir d'un conduit de commande (13) dont l'ouverture de sortie agit immédiatement et directement sur une surface de pression (18, 20) de la lame (8).

6. Outil de lamage (1) selon l'une des revendications 1 à 5, **caractérisé en ce que** la lame (8) est maintenue dans sa position de repos rétractée et/ou dans sa position de travail déployée en étant contrainte par ressort.

7. Outil de lamage selon l'une des revendications 1 à 6, **caractérisé en ce que** le déploiement (12) de la lame (8) se fait avec la force centrifuge et une force de ressort, et la rétraction (11) de la lame (8) se fait avec un agent de pression/commande (14)

8. Outil de lamage selon l'une des revendications 1 à 6, **caractérisé en ce que** le déploiement (12) de la lame (8) se fait avec la force centrifuge et un agent de refroidissement et une force de ressort, et la rétraction (11) de la lame (8) se fait avec un agent de pression/commande (14).

9. Outil de lamage selon l'une des revendications 1 à 6, **caractérisé en ce que** le déploiement (12) de la lame (8) se fait avec la force centrifuge et un agent de pression/commande (14), et la rétraction (11) de la lame (8) se fait avec une force de ressort et un agent de pression/commande (14).

10. Outil de lamage selon l'une des revendications 1 à 9, **caractérisé en ce que** quand la lame (8) est en contact, l'agent de pression/commande (14) arrive par un perçage de dérivation (19) dans la chambre de lame (5) et rince en même temps la fenêtre de lame (6).

11. Outil de lamage selon l'une des revendications 1 à 10, **caractérisé en ce qu'**avec une soupape d'inversion commandée par la force centrifuge, l'agent de pression/commande (14) est apte à être manoeuvré entre un conduit de commande (13) et un conduit de commande (43) pour rétracter (11) ou déployer (12) la lame.
